# EUROPEAN PATENT APPLICATION

(11) **EP 1 447 465 A2**
(43) Date of publication of application: **18.08.2004**
(21) Application number: 04002678.3
(22) Date of filing: 06.02.2004
(51) Int. Cl.: D03D 49/70

(54) **Method of driving waste selvage cutter for shuttleless loom and drive device for carrying out the same**

(30) Priority: 14.02.2003 JP 2003037030
(71) Applicant: TSUDAKOMA KOGYO KABUSHIKI KAISHA, Kanazawa-shi, Ishikawa-ken 921-8650 (JP)
(72) Inventor: Arie, Kiyoshi, Kanazawa-shi Ishikawa-ken 921-8650 (JP)
(74) Representative: von Samson-Himmelstjerna, Friedrich R., Dipl.-Phys.

(57) **Abstract**

A waste selvage cutter (1) has a waste selvage cutting unit (5) disposed near a selvage, on a pick arriving side opposite a picking side, of a fabric (4) on a shuttleless loom (2) to cut a waste selvage formed by interlacing leading ends of picked filling yams (7) and catch cords (18). Cutting period at which the waste selvage cutting unit (5) is driven for a cutting operation is controlled according to at least the rotating speed of the main shaft, a pick spacing in a fabric (4) on the shuttleless loom (2) or the type of filling yarns. A plurality of cutting periods for at least rotating speeds of the main shaft, pick spacings in the fabric (4) or types of filling yarns are stored in a storage device included in a drive motor controller (20) for controlling an drive motor (3) for driving the waste selvage cutting unit (5). A cutting period suitable for a weaving condition among the cutting periods stored in the storage device of the drive motor controller (20) is selected, and the drive motor controller (20) controls the drive motor (3) to drive the waste selvage cutting unit (5) for a cutting operation at the selected cutting period.

## Description

### BACKGROUND OF THE INVENTION

### Field of the Invention

The present invention relates to a waste selvage cutter for a shuttleless loom, and a method of driving the waste selvage cutter, capable of changing the cutting period at which the waste selvage cutter performs a cutting cycle on the basis of to at least the rotating speed of the main shaft of the shuttleless loom, pick spacing in a fabric on the shuttleless loom or the type of filling yarns.

### Description of the Related Art

A prior art waste selvage cutter for a shuttleless loom, disclosed in JP-A55-90650 is driven through a speed-change gear by the main shaft of the shuttleless loom. The cutting period at which the waste selvage cutter is driven is determined according to weaving conditions including the type of filling yarns and the pick spacing in the fabric by properly setting the gear ratio of the speed-change gear. This known waste selvage cutter performs one cutting cycle every several picks instead of performing one cutting cycle every pick to lessen the rate of frictional wear of the cutting blades of the waste selvage cutter and to extend the life of the waste selvage cutter.

This prior art waste selvage cutter requires changing the gear ratio of the speed-change gear to change the cutting period at which the cutting cycle is repeated every time weaving conditions are changed to weave different fabrics. Problems arise in the waste selvage cutter if the cutting period is determined improperly; the waste selvage cutter is driven for the cutting cycle excessively frequently in weaving a fabric having a large pick spacing, so that power is consumed uselessly, and the life of the waste selvage cutter is shortened uselessly or the waste selvage cutter is driven for the cutting cycle at an excessively long cutting period in weaving a fabric having a small pick spacing, so that the waste selvage cutter is unable to cut the waste selvage satisfactorily and the waste selvage remains uncut because the waste selvage moves fast past the waste selvage cutter.

The cutting period of the prior art waste selvage cutter cannot be changed while the loom is in operation. When the loom is a multiple-color loom capable of using filling yarns of different colors in weaving a fabric or when the loom weaves a fabric having parts respectively having different pick spacings, the waste selvage cutter is unable to cope with change in the type of filling yarns or pick spacing. Parts of the waste selvage including thick filling yarns or parts of the fabric having a small pick spacing moves fast past the waste selvage cutter and, consequently, the waste selvage cutter is unable to cut off the waste selvage satisfactorily and the waste selvage remains uncut on the fabric.

### SUMMARY OF THE INVENTION

Accordingly, it is an object of the present invention provide a waste selvage cutter for a shuttleless loom and a method of driving the same, capable of changing the cutting period of the waste selvage cutter according to at least the rotating speed of the main shaft of the shuttleless loom, the pick spacing in a fabric on the shuttleless loom or the type of filling yarns, and of properly controlling the cutting period of the waste selvage cutter for an efficient cutting operation.

According to one aspect of the present invention, a waste selvage cutter riving method of driving a waste selvage cutter for a shuttleless loom, including a waste selvage cutting unit disposed near a selvage, on a pick arriving side opposite a picking side, of a fabric on the shuttleless loom and driven by the main shaft of the shuttleless loom comprises changing cutting period at which the waste selvage cutting unit performs a cutting cycle, according to at least rotating speed of the main shaft, pick spacing in the fabric or type of filling yarns.

In the waste selvage cutter driving method according to the present invention, a plurality of cutting periods are set for at least rotating speed of the main shaft, pick spacing in the fabric or type of filling yarns, and stored in a storage device included in a drive motor controller for controlling a drive motor that drives the waste selvage cutting unit for a cutting operation, a cutting period suitable for a weaving condition is read from the storage device of the drive motor controller, and the waste selvage cutter is driven for a cutting operation at the selected cutting period.

In the waste selvage cutter driving method according to the present invention, a cutting period suitable for a weaving condition corresponding to a rotating speed signal, a pick spacing signal and a filling yarn signal provided by the shuttleless loom among the cutting periods stored in the storage device of the drive motor controller is selected and read from the storage device of the drive motor controller, and the selected cutting period is set automatically while the shuttleless loom is in a weaving operation, and a cutting period may be represented by the frequency of cutting cycles for one pick.

According to another aspect of the present invention, a waste selvage cutter comprises: a waste selvage cutting unit disposed near a selvage, on a pick arriving side opposite a picking side, of a fabric on the shuttleless loom; an actuator for driving the waste selvage cutting unit independently of the rotation of the main shaft of the shuttleless loom; and a drive motor controller for controlling the actuator; wherein the drive motor controller is provided with a storage device storing a plurality of cutting periods for at least rotating speed of the main shaft, pick spacing in the fabric or type of filling yarns, and the drive motor controller controls the actuator so as to drive the waste selvage cutting unit for a cutting operation at a cutting period suitable for a weaving condition and read from the storage device of the drive motor controller.

In the waste selvage cutter according to the present invention, a cutting period suitable for a weaving condition corresponding to a rotating speed signal, a pick spacing signal and a filling yarn signal provided by the shuttleless loom among the cutting periods stored in the storage device of the drive motor controller is selected and read from the storage device of the drive motor controller, and the selected cutting period is set automatically while the shuttleless loom is in a weaving operation, and the actuator may be controlled for driving the waste selvage cutting unit for a cutting operation at the selected cutting period.

Since the cutting period at which the waste selvage cutting unit disposed near a selvage of the fabric on the arriving side opposite the picking side and driven independently of the main shaft performs a cutting cycle is controlled according to at least the rotating speed of the main shaft, the pick spacing in the fabric on the shuttleless loom or the type of filling yams, the cutting period is extended to avoid uselessly performing the cutting cycle excessively frequently. Consequently, the life of the waste selvage cutter is extended, and the power consumption of the waste selvage cutter can be reduced. When the pick spacing is small and the fabric advances fast, the cutting period is shortened so that the waste selvage can be satisfactorily cut off.

Since the plurality of cutting periods are set for at least the rotating speed of the main shaft, the pick spacing in a fabric on the shuttleless loom or the type of filling yarns and stored in the storage device of the drive motor controller, a cutting period suitable for a weaving condition is read from the storage device of the drive motor controller, and the waste selvage cutting unit of the waste selvage cutter is driven for a cutting cycle at the selected cutting period, the waste selvage cutting unit performs a cutting cycle at the optimum cutting period suitable for the weaving condition and hence the waste selvage can be cut without failure.

Since suitable one of the cutting periods stored in the storage device of the drive motor controller is selected and read from the controller on the basis of a rotating speed signal, a pick spacing signal and a filling yarn signal provided by the shuttleless loom, and the cutting period is automatically changed while the shuttleless loom is in operation, the waste selvage cutting unit can operate at a suitable cutting period even if the shuttleless loom is a multiple-color loom capable of using filling yarns of different yarn counts or when the shuttleless loom weaves a fabric having parts respectively having different pick spacings.

Since the cutting period at which the waste selvage cutting unit performs a cutting cycle is defined by the number of cutting cycles per pick, the cutting operation of the waste selvage cutting unit can be synchronized with the rotation of the main shaft of the shuttleless loom.

### BRIEF DESCRIPTION OF THE DRAWINGS

The above and other objects, features and advantages of the present invention will become more apparent from the following description made in connection with the accompanying drawings, in which:
Fig. 1 is a schematic view of a waste selvage cutter in a preferred embodiment according to the present invention for a shuttleless loom;
Fig. 2 is a plan view of a waste selvage cutting unit included in the waste selvage cutter shown in Fig. 1;
Fig. 3 is a side elevation of the waste selvage cutting unit shown in Fig. 2;
Fig. 4 is a graph showing the variation of the position of a reed included in the shuttleless loom with the angular position of the main shaft of the shuttleless loom, and a drive signal for driving a drive motor;
Fig. 5 is a graph showing the variation of the position of a reed included in the shuttleless loom with the angular position of the main shaft of the shuttleless loom, and a drive signal for driving a drive motor;
Fig. 6 is a graph showing the variation of the position of a reed included in the shuttleless loom with the angular position of the main shaft of the shuttleless loom, and a drive signal for driving a drive motor;
Fig. 7 is a graph showing the variation of the position of a reed included in the shuttleless loom with the angular position of the main shaft of the shuttleless loom, and a drive signal for driving a drive motor;
Fig. 8 is a schematic view, similar to Fig. 1, of the waste selvage cutter shown in Fig. 1 of assistance in explaining the frequency of operation of the waste selvage cutting unit of the waste selvage cutter expressed by the number of cutting cycles performed for one picking cycle; and
Fig. 9 is a graph showing the variation of the position of a reed included in the shuttleless loom with the angular position of the main shaft of the shuttleless loom, and a drive signal for driving the drive motor.

### DESCRIPTION OF THE PREFERRED EMBODIMENTS

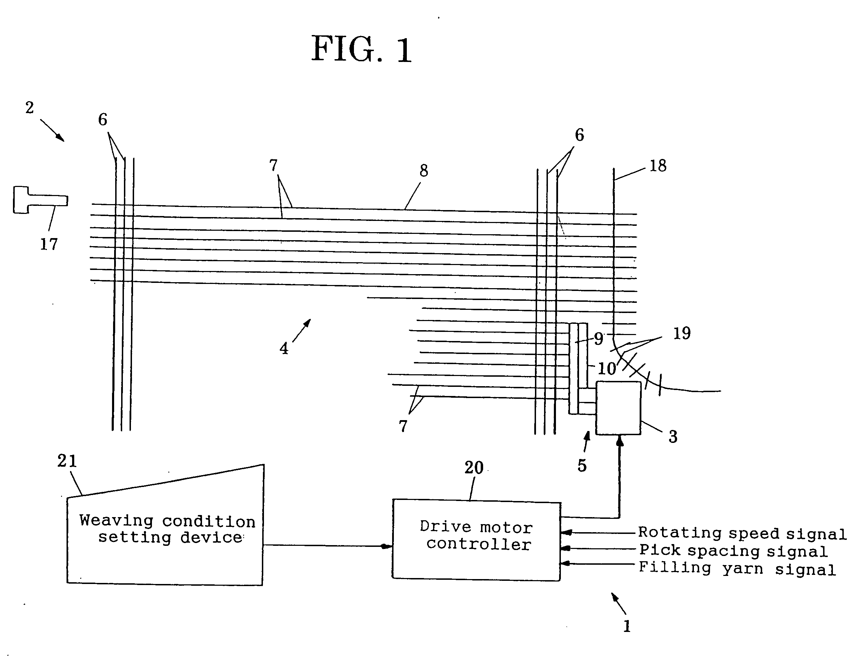

Referring to Fig. 1 showing a waste selvage cutter 1 in a preferred embodiment according to the present invention, the waste selvage cutter 1 has a waste selvage cutting unit 5 disposed in a cutting region on an arriving side of a shuttleless loom 2 opposite a picking side of the shuttleless loom 2. The waste selvage cutting unit 5 cuts a leading end of a picked filling yarn 7 in the cutting region after the picked filling yarn 7 has been beaten up. The waste selvage cutting unit 5 is disposed at a distance corresponding to several filling yarns 7 picked and woven into a fabric 4 on the front side from the cloth fell 8 of the fabric 4. A drive motor 3, i.e., an actuator, drives the waste selvage cutting unit 5 for a cutting operation to cut several picked filling yarns 7 at a time.

A main picking nozzle 17 picks a filling yarn 7 into a shed formed by warp yarns 6, and catch cords 18 extended on the arriving side catch the leading end of the picked filling yarn 7. The picked filling yarn 7 is beaten up into the cloth fell 8 of the fabric 4. After catching the leading end of the picked filling yarn 7, the catch cords 18 are twisted to form a waste selvage by holding the leading end of the picked filling yarn 7. The catch cords 18 advances together with the fabric 4 in the direction of the arrow and thereby the waste selvage formed by holding the leading ends of the picked filling yarns 7 with the catch cords 18 is carried into the cutting region. The drive motor 3 drives the waste selvage cutting unit 5 at a predetermined cutting period to cut off the waste selvage, i.e., the leading ends of the picked filling yarns 7 and the catch cords 18, from the selvage of the fabric 4. The waste selvage thus separated from the selvage of the fabric 4 is advanced into a waste box or the like. A drive motor controller 20 controls the drive motor 3 so as to change the cutting period at which the waste selvage cutting unit 5 operates according to at least the rotating speed of the main shaft of the shuttleless loom, the pick spacing in the fabric 4 or the type of filling yarns.

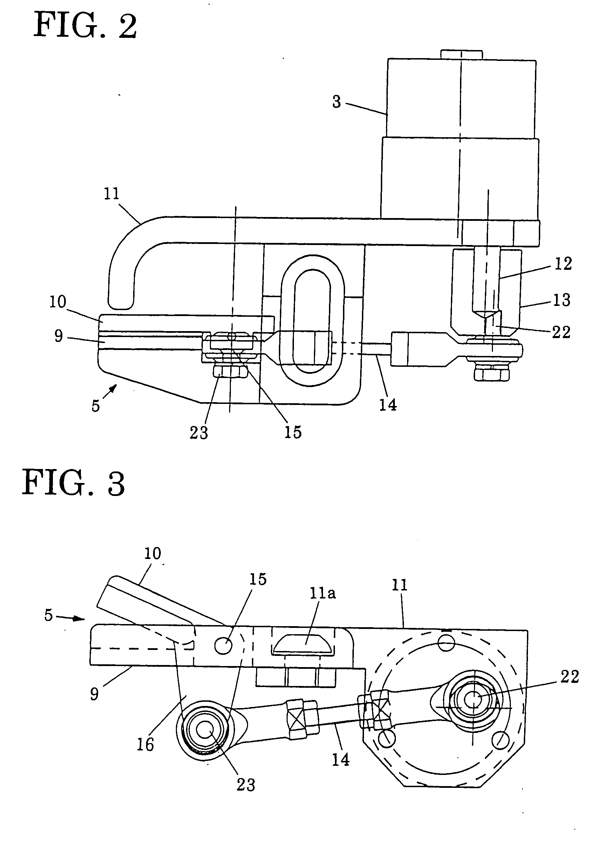

Referring to Figs. 2 and 3 showing the waste selvage cutting unit 5 included in the waste selvage cutter 1, the false selvedge cutting unit 5 is of a scissors type including a stationary cutting blade 9, a movable cutting blade 10, a bracket 11, the drive motor 3, a connecting shaft 13 and a connecting rod 14. The bracket 11 is fastened to a part, on the arriving side, of the frame of the shuttleless loom 2 with a bolt 11a.

The stationary cutting blade 9 is attached to the bracket 11 with its cutting edge facing up. The movable cutting blade 10 is supported for turning by a pin 15 on the stationary cutting blade 9. A lever 16 is formed integrally with the movable cutting blade 10. The drive motor 3 combined with a reduction gear is mounted on the bracket 11. The connecting shaft 13 is connected fixedly to the drive shaft 12 of the reduction gear. An eccentric shaft 22, i.e., a bolt, is fixed to the connecting shaft 13 in parallel to the drive shaft 12. The connecting rod 14 has one end supported by a bearing on the eccentric shaft 22 so as to be turnable relative to the eccentric shaft 22, and the other end supported by a bearing on a connecting pin 23 attached to the lever 16 so as to be turnable on the connecting pin 23. Thus, the bracket 11, the drive shaft 12, the connecting shaft 13, the eccentric shaft 22, the connecting rod 14, the connecting pin 23, the pin 15 and the lever 16 constitute a crank mechanism. The waste selvage cutting unit 5 performs one cutting cycle every time the drive shaft 12 makes one full turn.

The drive motor controller 20 controls the drive motor 3 to change the cutting period at which the waste selvage cutting unit 5 performs a cutting cycle according to at least the rotating speed of the main shaft of the shuttleless loom 2, the pick spacing in the fabric 4 or the type of filling yarns. The drive motor controller 20 is provided with a storage device storing a plurality of cutting periods (rotating speeds of the drive motor) for at least the rotating speed of the main shaft of the shuttleless loom 2, the pick spacing in the fabric 4 or the type of filling yarns. A rotating speed signal, a pick spacing signal and a filling yarn selection signal provided by the shuttleless loom 2 are given to the drive motor controller 20 while the shuttleless loom 2 is in weaving operation. More specifically, the rotating speed signal is a command signal given to a drive unit, not shown, for driving a main motor for driving the main shaft and specifying a rotating speed for the main shaft. The rotating speed signal may be a signal representing a measured operating speed of the main motor for driving the main shaft. The pick spacing signal specifying a pick spacing is given to controllers for controlling a take-up motor, not shown, and a let-off motor, not shown. The filling yarn selection signal is a signal specifying one of picking devices of the shuttleless loom 2 (multiple-color shuttleless loom) and given to a multiple-color picking controller, not shown. These signals correspond to pick count, respectively

The operator operates a weaving condition setting device 21 before starting the shuttleless loom for a weaving operation to store weaving conditions, a cutting period at which the waste selvage cutting unit 5 performs a cutting cycle (operating speed of the drive motor) in the storage device of the drive motor controller 20.

The operator selects one of three control modes in which the drive motor controller 20 controls the drive motor 3. A first control mode determines a cutting period (operating speed of the drive motor) at which the waste selvage cutting unit 5 performs a cutting cycle on the basis of at least the rotating speed of the main shaft, the pick spacing in the fabric 4 or the type of filling yarns. A second control mode determines a cutting period (operating speed of the drive motor) at which the waste selvage cutting unit 5 performs a cutting cycle on the basis of rotating speed signal, a pick spacing signal and a filling yarn signal provided by the shuttleless loom 2. A third control mode is the combination of the first and the second control mode.

When the first control mode is selected, the drive motor controller 20 selects a cutting period (operating speed of the drive motor) at which the waste selvage cutting unit 5 performs a cutting cycle on the basis of at least the rotating speed of the main shaft, the pick spacing in the fabric 4 or the type of filling yarns, and controls the operating speed of the drive motor 3 so that the waste selvage control unit 5 performs a cutting cycle at the selected cutting period.

When the second control mode is selected, the drive motor controller 20 selects a cutting period (operating speed of the drive motor) at which the waste selvage cutting unit 5 performs a cutting cycle on the basis of a rotating speed signal, a pick spacing signal and a filling yarn signal provided by the shuttleless loom 2, and controls the operating speed of the drive motor 3 so that the waste selvage control unit 5 performs a cutting cycle at the selected cutting period.

When the third control mode is selected, the drive motor controller 20 selects a cutting period (operating speed of the drive motor) at which the waste selvage cutting unit 5 performs a cutting cycle on the basis of at least the rotating speed of the main shaft, the pick spacing in the fabric 4 or the type of filling yarns or on the basis of a rotating speed signal, a pick spacing signal and a filling yarn signal provided by the shuttleless loom 2, and controls the operating speed of the drive motor 3 so that the waste selvage control unit 5 performs a cutting cycle at the selected cutting period.

Tables 1(a), 1(b) and 1(c) show cutting periods T for rotating speeds N of the main shaft, pick spacings D and filling yarn types Y by way of example. Cutting periods T1 to T6 for rotating speeds N1 and N2, pick spacings D1 and D2 and filling yarn types Y1 and Y2 are optimum cutting periods empirically determined for weaving conditions. The cutting periods T1 to T6 are stored in the storage device of the drive motor controller 20.

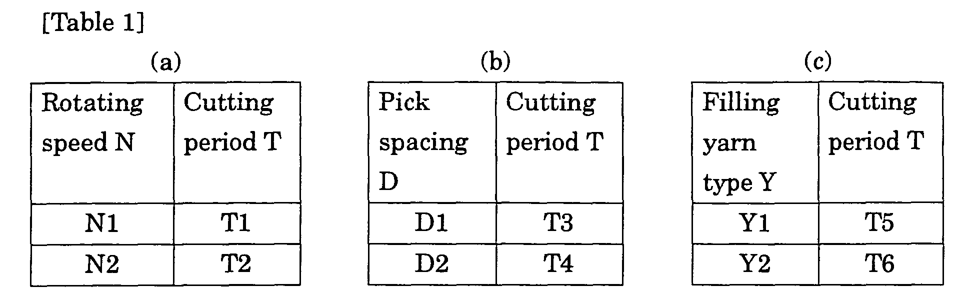

For example, when the pick spacing in the fabric 4 is D1 shown in Table 1(b), the operator operates the weaving condition setting device 21 to give a signal representing the pick spacing D1 to the drive motor controller 20. Then, the drive motor controller 20 selects the cutting period T3 and controls drive motor 3 so that the waste selvage cutting unit 5 is drive to perform a cutting cycle at the cutting period T3.

When the pick spacing D of the fabric 4 is changed intentionally by a pick spacing controller, not shown, while the shuttleless loom 2 is in the weaving operation, the drive motor controller 20 may be constructed so that the drive motor controller 20 is capable of automatically changing the cutting period T For example, when the shuttleless loom 2 changes a signal representing the pick spacing D1 for a signal representing the pick spacing D2, the drive motor controller 20 changes a signal representing the cutting period T3 automatically for a signal representing the cutting period T4. The drive motor controller 20 operates similarly when the rotating speed of the main shaft and the type of filling yarns are changed intentionally.

Table 2 shows combinations of rotating speeds N1 and N2, pick spacings D1 and D2 and filling yarn types Y1 and Y2, and cutting periods T1 to T8 for those combinations. The cutting periods T1 to T8 are optimum cutting periods empirically determined for weaving conditions. The cutting periods T1 to T8 are stored in the storage device of the drive motor controller 20.

**[Table 2]**

| Rotating speed N | Pick spacing D | Filling yarn type Y | Cutting period T |
|---|---|---|---|
| N1 | D1 | Y1 | T1 |
| | | Y2 | T2 |
| | D2 | Y1 | T3 |
| | | Y2 | T4 |
| N2 | D1 | Y1 | T5 |
| | | Y2 | T6 |
| | D2 | Y1 | T7 |
| | | Y2 | T8 |

The operator operates the weaving condition setting device 21 before starting weaving the fabric 4 to enter values of parameters including rotating speed N, pick spacing D and filling yarn type Y. The drive motor controller 20 selects a value of cutting period T at which the waste selvage cutting unit 5 performs a cutting cycle for the values of the parameters. For example, when the operator specifies the rotating speed N1, the pick spacing D1 and the filling yarn type Y1 shown in Table 2, the drive motor controller 20 selects the cutting period T1.

When weaving conditions are changed while the shuttleless loom 2 is in weaving operation, the drive motor controller 20 may automatically select a suitable cutting period on the basis of a rotating speed signal, a pick spacing signal and a filling yarn signal provided by the shuttleless loom 2, and the cutting period may be automatically changed while the shuttleless loom is in operation.

Table 3 shows cutting periods T for combinations of rotating speeds N, pick spacings D and filling yarn types Y. Two basic cutting periods T1 and T2 are set respectively for two rotating speeds N1 and N2 and stored in the storage device of the drive motor controller 20. Effective cutting periods are calculated by multiplying the basic cutting periods T1 and T2 by correction factors set for pick spacings D and filling yarn types Y. For example, when the rotating speed N1, the pick spacing D1 and the filling yarn type Y1 are selected as weaving conditions, the effective cutting period is T1xd1xy1.

**[Table 3]**

| Rotating speed N | | Pick spacing D | | Filling yarn type Y | | Effective cutting period T |
|---|---|---|---|---|---|---|
| Level | Basic cutting period | Level | Correction factor | Level | Correction factor | |
| N1 | T1 | D1 | d1 | Y1 | y1 | T1×d1×y1 |
| | | | | Y2 | y2 | T1×d1×y2 |
| | | D2 | d2 | Y1 | y1 | T1×d2×y1 |
| | | | | Y2 | y2 | T1×d2×y2 |
| N2 | T2 | D1 | d1 | Y1 | y1 | T2×d1×y1 |
| | | | | Y2 | y2 | T2×d1×y2 |
| | | D2 | d2 | Y1 | y1 | T2×d2×y1 |
| | | | | Y2 | y2 | T2×d2×y2 |

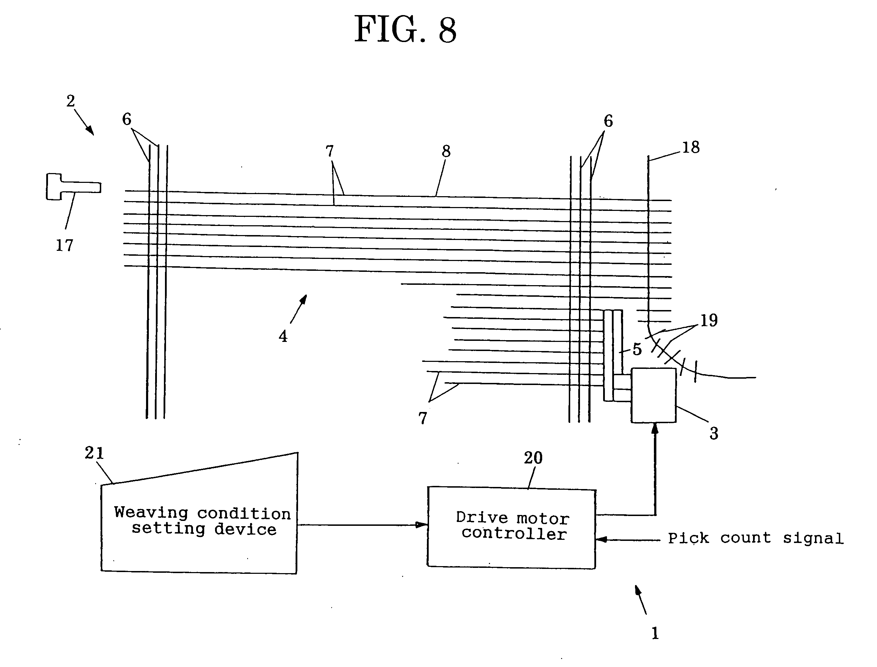

Although the drive motor controller 20 changes the cutting period at which the waste selvage cutting unit 5 performs a cutting cycle on the basis of the rotating speed signal, the pick spacing signal and the filling yarn signal provided by the shuttleless loom 2, the cutting period may be changed according to the number of picks. Pick count corresponds univocally to weaving conditions including rotating speed, pick spacing and filling yarn type. Therefore, pick count (Fig. 8) represents to weaving conditions including rotating speed, pick spacing and filling yarn type. A loom controller, not shown, receives a pick count signal and provides signals on the basis of pick count.

Table 4 shows cutting periods for combinations of weaving conditions, i.e., pick counts, pick spacings and filling yarn types. The pick spacings D1, D2, filling yarn types Y1 and Y2, and cutting periods T1, T2, T3 and T4 for pick counts shown in Table 4 are stored beforehand in the storage device of the drive motor controller 20. The drive motor controller 20 counts the number of picks, reads a pick spacing D, a filling yarn type Y and a cutting period T for a pick count upon the coincidence of the pick count with a predetermined pick count, and changes the cutting period. The pick count is reset to zero every 1000 picks.

**[Table 4]**

| Pick count | Pick spacing D | Filling yarn type Y | Cutting period T |
|---|---|---|---|
| 1 | D1 | Y1 | T1 |
| 200 | | Y2 | T2 |
| 600 | D2 | Y1 | T3 |
| 800 | | Y2 | T4 |

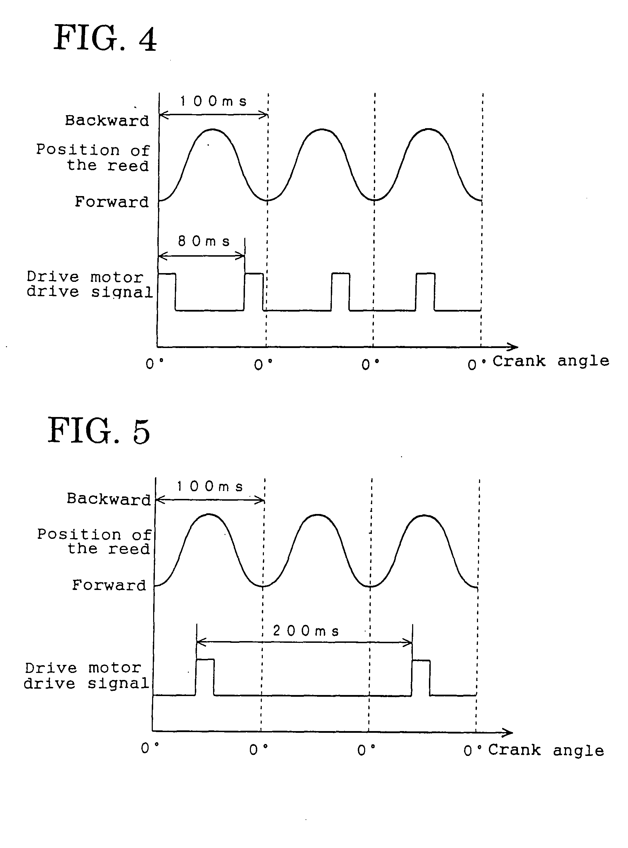

Fig. 4 shows the variation of the position of the reed with the angular position of the main shaft and a drive signal for driving the drive motor 3 when the main shaft of the shuttleless loom 2 rotates at 600 rpm, i.e., at a period of 100 ms, and the waste selvage cutting unit 5 performs a cutting cycle at a cutting cycle of 80 ms. While the reed performs one beat-up cycle every one full turn of the main shaft, the waste selvage cutting unit 5 performs one cutting cycle every 80 ms independently of the rotation of the main shaft. The waste selvage cutting unit 5 operates in an operating mode shown in Fig. 4 when weaving conditions are those requiring the frequent operation of the waste selvage cutting unit 5, such as a small pick spacing (the fabric 4 advances fast) or filling yarns are thick.

Fig. 5 shows the variation of the position of the reed with the angular position of the main shaft and a drive signal for driving the drive motor 3 when the main shaft of the shuttleless loom 2 rotates at 600 rpm, i.e., at a period of 100 ms, and the waste selvage cutting unit 5 performs a cutting cycle at a cutting cycle of 200 ms. While the reed performs one beat-up cycle every one full turn of the main shaft, the waste selvage cutting unit 5 performs one cutting cycle every 200 ms independently of the rotation of the main shaft. Since the cutting period of 200 ms at which the waste selvage cutting unit 5 performs one cutting cycle is twice the period of rotation of the main shaft, namely, 100 ms, the waste selvage cutting unit 5 performs a cutting cycle every two beat-up cycles. The waste selvage cutting unit 5 operates in an operating mode shown in Fig. 5 when weaving conditions are those requiring the infrequent operation of the waste selvage cutting unit 5, such as a large pick spacing (the fabric 4 advances slow) or filling yarns are thin.

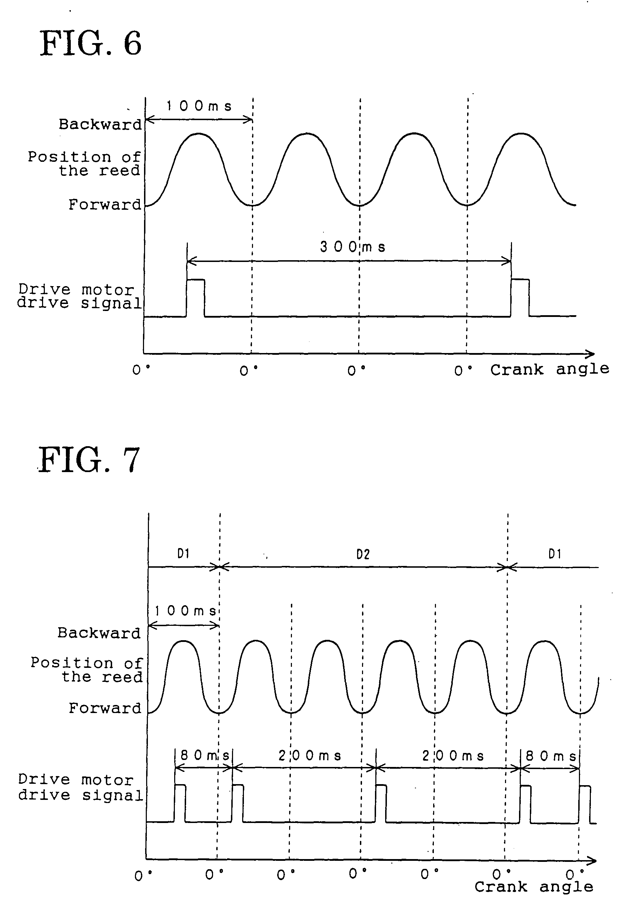

Fig. 6 shows the variation of the position of the reed with the angular position of the main shaft and a drive signal for driving the drive motor 3 when the main shaft of the shuttleless loom 2 rotates at 600 rpm, i.e., at a period of 100 ms, and the waste selvage cutting unit 5 performs a cutting cycle at a cutting cycle of 300 ms. While the reed performs one beat-up cycle every one full turn of the main shaft, the waste selvage cutting unit 5 performs one cutting cycle every 300 ms independently of the rotation of the main shaft. Since the cutting period of 300 ms at which the waste selvage cutting unit 5 performs one cutting cycle is three times the period of rotation of the main shaft, namely, 100 ms, the waste selvage cutting unit 5 performs a cutting cycle every three beat-up cycles. The waste selvage cutting unit 5 operates in an operating mode shown in Fig. 6 when weaving conditions are those requiring the infrequent operation of the waste selvage cutting unit 5, such as a large pick spacing (the fabric 4 advances slow) or filling yarns are thin.

Fig. 7 shows the variation of the position of the reed with the angular position of the main shaft and a drive signal for driving the drive motor 3 when the main shaft of the shuttleless loom 2 rotates at 600 rpm, i.e., at a period of 100 ms, and the cutting period at which the waste selvage cutting unit 5 performs a cutting cycle is variable. While the reed performs one beat-up cycle every one full turn of the main shaft, the waste selvage cutting unit 5 performs one cutting cycle every 80 ms independently of the rotation of the main shaft when the pick spacing D1 is selected, and the waste selvage cutting unit 5 performs one cutting cycle every 200 ms independently of the rotation of the main shaft when the pick spacing D2 is selected. The waste selvage cutting unit 5 operates in an operating mode shown in Fig. 7 when weaving conditions changes during the weaving of the fabric 4, i.e., when the pick spacings D1 and D2 (D1 < D2) are used alternately.

Although the operating frequency of the waste selvage cutting unit 5 is expressed by cutting period (ms) in the foregoing description, the same may be expressed by cutting cycles per pick.

Fig. 8 is a view of assistance in explaining the frequency of operation of the waste selvage cutting unit 5 of the waste selvage cutter 1 expressed by the number of cutting cycles performed for one picking cycle. The drive motor controller 20 receives a pick count signal, i.e., a signal representing the number of full rotations of the main shaft of the shuttleless loom 2, and the drive motor controller 20 drives the drive motor 3 in synchronism with the rotation of the main shaft of the shuttleless loom 2.

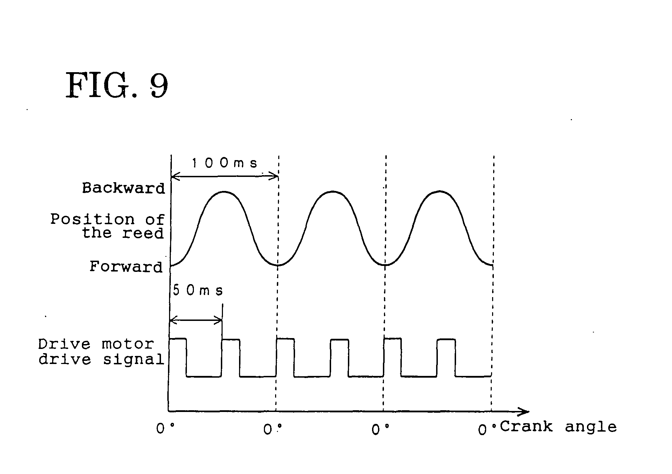

Fig. 9 shows the variation of the position of the reed with the angular position of the main shaft and a drive signal for driving the drive motor 3 when the main shaft of the shuttleless loom 2 rotates at 600 rpm, i.e., at a period of 100 ms, and the waste selvage cutting unit 5 performs two cutting cycles for each pick (2 cutting cycles/pick). The number of picking cycles per pick may be changed according to weaving conditions and may be, for example, 0.5 cutting cycles per pick (1 cutting cycle/2 picks). In an operating mode shown in Fig. 9, the waste selvage cutting unit 5 starts a cutting cycle at angular positions of 0° and 180° of the main shaft. The cutting cycles may be started at any angular positions of the main shaft, such as 10° and 190°, provided that two cutting cycles are performed every one picking cycle. The waste selvage cutting unit 5 operates in the operating mode shown in Fig. 9 when weaving conditions are those requiring the frequent operation of the waste selvage cutting unit 5, such as a small pick spacing (the fabric 4 advances fast) or filling yarns are thick. Although the number of cutting cycles is set in this embodiment, the number of picking cycles per one cutting cycle may be set.

Although the invention has been described in its preferred embodiment with a certain degree of particularity, obviously many changes and variations are possible therein. It is therefore to be understood that the present invention may be practiced otherwise than as specifically described herein without departing from the scope and spirit thereof.

## Claims

1. A waste selvage cutter driving method of driving a waste selvage cutter (1) for a shuttleless loom (2), including a waste selvage cutting unit (5) disposed near a selvage, on a pick arriving side opposite a picking side, of a fabric (4) on the shuttleless loom (2) and driven by the main shaft of the shuttleless loom (2), said method comprising changing cutting period at which the waste selvage cutting unit (5) performs a cutting cycle, according to at least rotating speed of the main shaft, pick spacing in the fabric (4) or type of filling yarns.

2. The waste selvage cutter driving method according to claim 1, wherein a plurality of cutting periods are set for at least rotating speed of the main shaft, pick spacing in the fabric or type of filling yarns, and stored in a storage device included in a drive motor controller (20) for controlling a drive motor that drives the waste selvage cutting unit (5) for a cutting operation, a cutting period suitable for a weaving condition is read from the storage device of the drive motor controller (20), and the waste selvage cutter (5) is driven for a cutting operation at the selected cutting period.

3. The waste selvage cutter driving method according to claim 1 or 2, wherein a cutting period suitable for a weaving condition corresponding to a rotating speed signal representing a rotating speed of a main shaft of the shuttleless loom (2), a pick spacing signal representing a pick spacing in the fabric (4), and a filling yarn signal representing a type of filling yarns provided by the shuttleless loom (2) among the cutting periods stored in the storage device of the drive motor controller (20) is selected and read from the storage device of the drive motor controller (20), and the selected cutting period is set automatically while the shuttleless loom (2) is in a weaving operation.

4. The waste selvage cutter driving method according to any one of claims 1 to 3, wherein a cutting period is represented by the frequency of cutting cycles for one pick.

5. A waste selvage cutter (1) comprising:
a waste selvage cutting unit (5) disposed near a selvage, on a pick arriving side opposite a picking side, of a fabric (4) on the shuttleless loom (2);
an actuator (3) for driving the waste selvage cutting unit (5) independently of the rotation of the main shaft of the shuttleless loom (2); and
a drive motor controller (20) for controlling the actuator (3);
wherein the drive motor controller (20) is provided with a storage device storing a plurality of cutting periods for at least rotating speed of the main shaft, pick spacing in the fabric (4) or type of filling yarns, and the drive motor controller(20) controls the actuator (3) so as to drive the waste selvage cutting unit (5) for a cutting operation at a cutting period suitable for a weaving condition and read from the storage device of the drive motor controller (20).

6. The waste selvage cutter (1) according to claim 5, wherein a cutting period suitable for a weaving condition corresponding to a rotating speed signal, a pick spacing signal and a filling yarn signal provided by the shuttleless loom (2) among the cutting periods stored in the storage device of the drive motor controller (20) is selected and read from the storage device of the drive motor controller (20), and the selected cutting period is set automatically while the shuttleless loom (2) is in a weaving operation, and the drive motor controller (20) controls the actuator (3) to drive the waste selvage cutting unit (5) for a cutting operation at the selected cutting period.
